Europäisches Patentamt

European Patent Office

Office européen des brevets

(19)

(11) Numéro de publication: **0 207 209**
**A1**

(12)

# DEMANDE DE BREVET EUROPEEN

(21) Numéro de dépôt: 85830165.8

(22) Date de dépôt: 01.07.85

(51) Int. Cl.⁴: **B23B 29/034**

(43) Date de publication de la demande:
07.01.87 Bulletin 87/02

(84) Etats contractants désignés:
DE FR GB SE

(71) Demandeur: **BAKUER ITALIANA S.p.A.**
**Via del Farneto San Martino alla Palma**
**I-50010 Scandicci Firenze(IT)**

(72) Inventeur: **Donnini, Giovanni**
**Via Bardelli 3**
**I-50139, Firenze(IT)**
Inventeur: **Fantini, Giuliano**
**Via Targioni Tozzetti 26**
**I-50144, Firenze(IT)**

(74) Mandataire: **Martini, Lazzaro**
**Ufficio Brevetti Ing. Lazzaro Martini Via**
**Brunelleschi, 1**
**I-50123 Firenze(IT)**

(54) **Dispositif pour rendre automatique le mouvement transversal du coulisseau porte-outil, monté sur le mandrin d'une machine-outil, durant le mouvement d'usinage.**

(57) Pour rendre automatique le déplacement radial du porte-outil monté sur le mandrin d'une machine-outil durant le mouvement d'usinage, on utilise:

-un porte-coulisseau (3) solidaire du mandrin (22) avec un train épicycloïdal (9,21,22,19) qui, par l'intermédiaire des roues (8,7) agit sur une vis (6) d'entrainement du porte-outil (4) et, avec une roue à dents hélicoïdes (10), faisant prise avec la roue (22) du train épicycloïdal et asservie à un moteur électrique (11) à courant continu monté sur le porte-coulisseau (3);

-un trasducteur (15) de distance avec l'adjonction éventuelle d'un transducteur de vitesse, accouplé audit moteur électrique (14);

-une unité de commande du dispositif;

-un connecteur (16) por l'enclenchement/déclenchement automatique au moment du montage/démontage du dispositif sur/du mandrin de la machine, pour obtenir les contacts électriques du moteur (14) et du transducteur (15) et

de ceux-ci avec l'unité de commande du dispositif et avec l'unité de commande de la machine.

Fig. 2

Fig. 5

## Dispositif pour rendre automatique le mouvement transversal du coulisseau porte-outil, monté sur le mandrin d'une machine-outil, durant le mouvement d'usinage.

L'invention concerne un dispositif pour rendre automatique le mouvement transversal du coulisseau porte-outil monté sur le mandrin d'une machine-outil durant l'usinage.

On connaît des dispositifs qui permettent d'obtenir des déplacements radiaux du coulisseau porte-outil monté sur le mandrin de machines-outils durant l'usinage et dont le mouvement est dérivé d'un moteur électrique de bord. Mais ces dispositifs ne sont pas contrôlables d'eux mêmes, ni ne peuvent être déplacés au moyen d'un bras de commande et ils ne permettent pas non plus de récupérer la perte de mouvement durant l'usinage en continu en inversant la direction du mouvement.

Le but principal de la présente invention est d'eliminer tous ces inconvénients.

En outre l'invention a pour but d'assurer le contrôle dudit mouvement du porte-outil soit de manière autonome, soit au moyen de l'unité-même de commande de la machine-outil.

Elle a également pour but de permettre l'enclenchement/déclenchement automatique des contacts électriques au moment du montage/démontage du dispositif sur/du mandrin de la machine.

On est parvenu à ce résultat conformément à l'invention en adoptant l'idée consistant à équiper n'inporte quel type connu de dispositif pour le déplacement radial du porte-outil monté sur le mandrin, d'un moteur électrique à courant continu, accouplé à un transducteur de distance et/ou de vitesse et à une unité de commande CNC, et d'un connecteur à enclenchement et déclenchement automatiques.

Les avantages obtenus grâce à l'invention consistent essentiellement en ce qu'il est possible d' obtenir une variation continue et constante de la vitesse de déplacement du coulisseau porte-outil en direction radiale par rapport à l'axe du mandrin, son déplacement rectiligne alternatif et l'arrêt de son mouvement en n'importe quel point, avec la possibilité de détecter des erreurs de dimensions sur les axes x et y en les corrigeant sur l'axe u du dispositif, ce qui permet d'effectuer des troncatures, des alésages, des tournages externes/internes, des filetages; en ce qu'il est possible d'effectuer, de manière séquentielle, plusieurs trous, même de diamètres différents, avec le même outil agissant sur l'axe u corrigé, ce qui permet de réduire le nombre d'outils en stock; en ce qu'il est possible de faire interagir et fonctionner de manière séquentielle le centre d'usinage avec l'unité de commande, ce qui permet une interpolation pour l'usinage de parties extrêmement complexes en raison du mouvement simultané et continu de quatre axes, avec possibilité de récupération de la perte de mouvement qui se produit dans les usinages en continu, par inversion de la direction du mouvement; en ce que le connecteur présente une faible résistance en ohm, une faible charge ampérométrique spécifique, une faible pression spécifique, une usure minime, un grand nombre de manoeuvres, des contacts solides sans liens positifs, qu'il est en outre bien protégé contre la saleté et qu'il remplit le rôle de "stop-blok".

L'invention est exposé ci-après plus en detail à l'aide de dessins représentant un mode d'exécution qui ne doit pas être consideré de manière limitative.

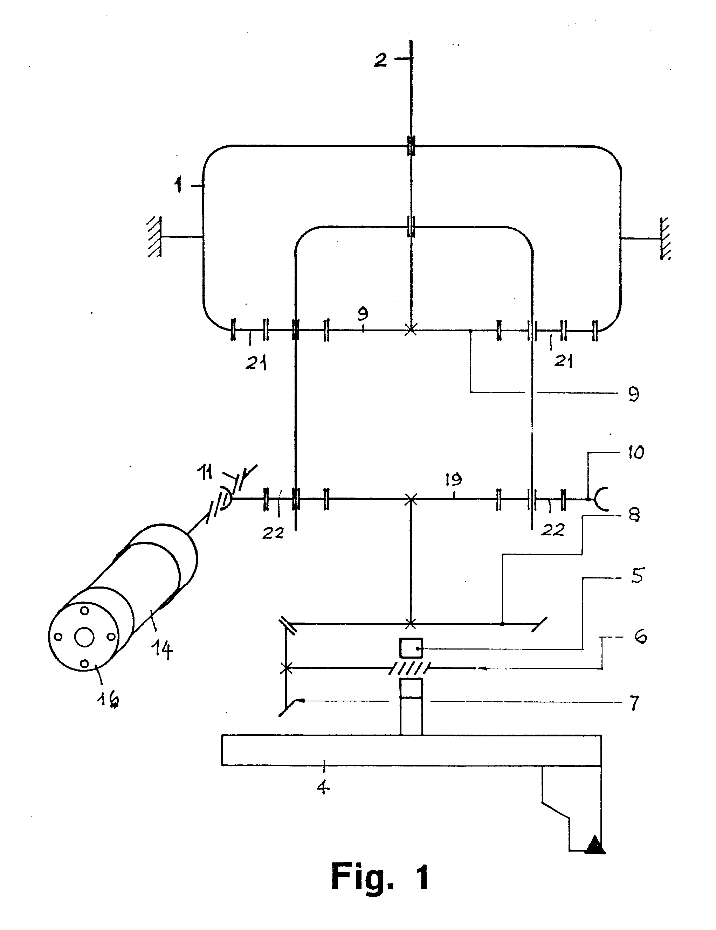

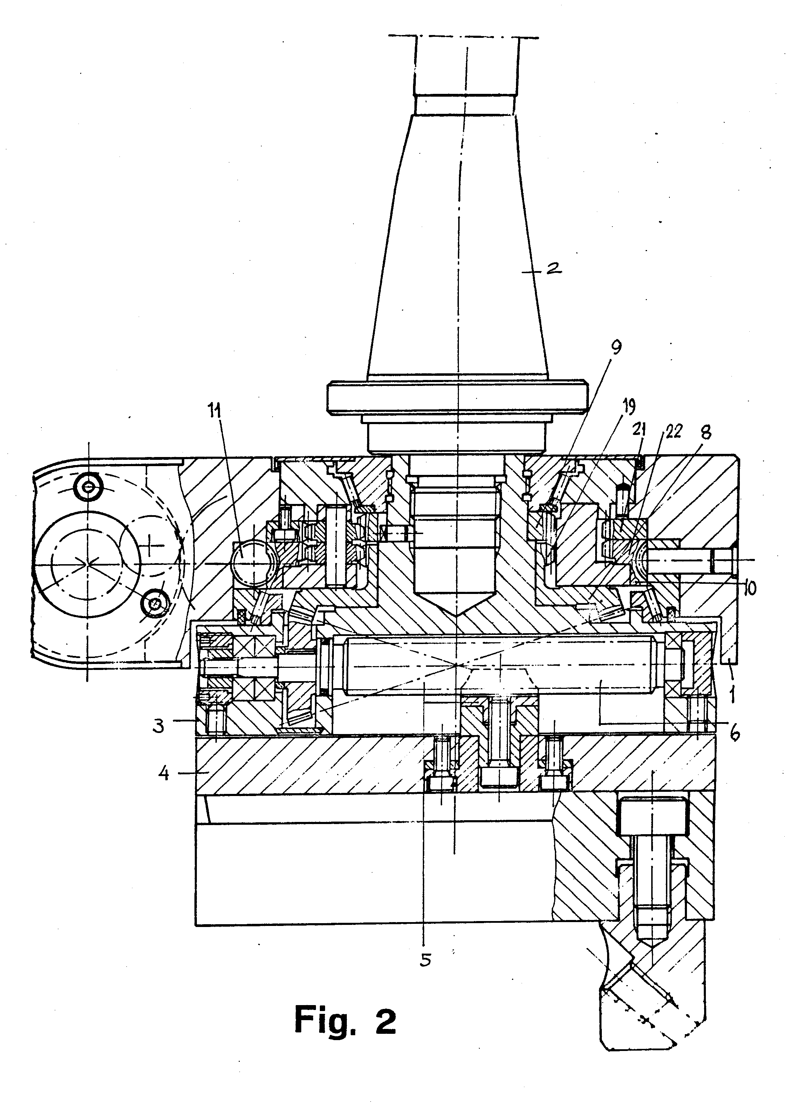

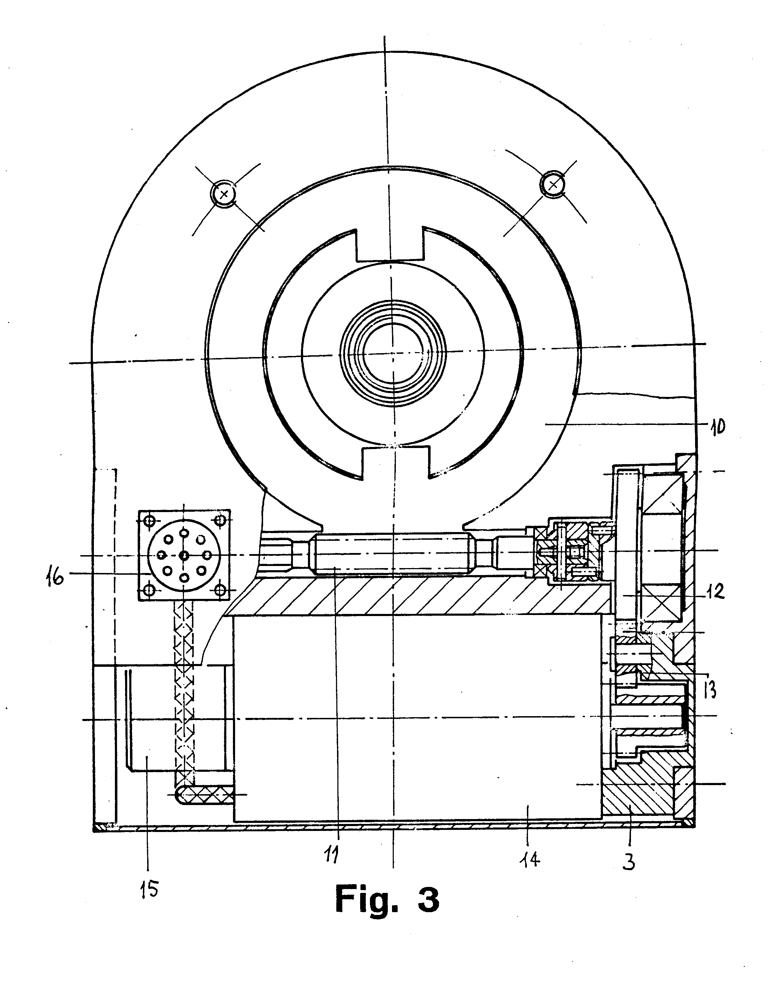

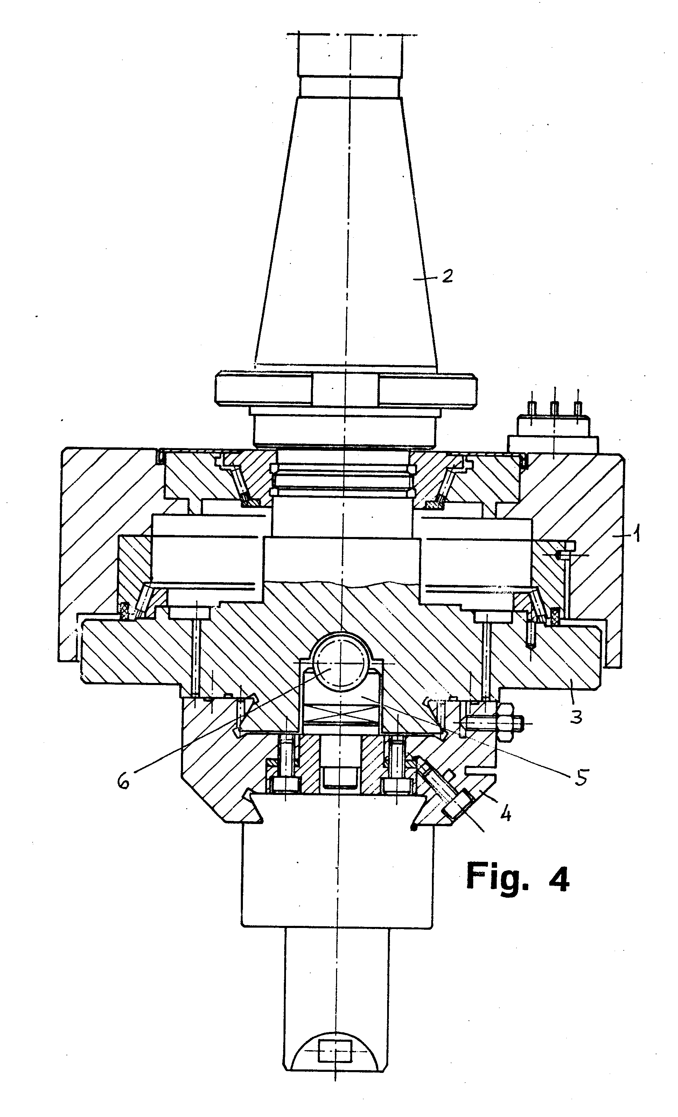

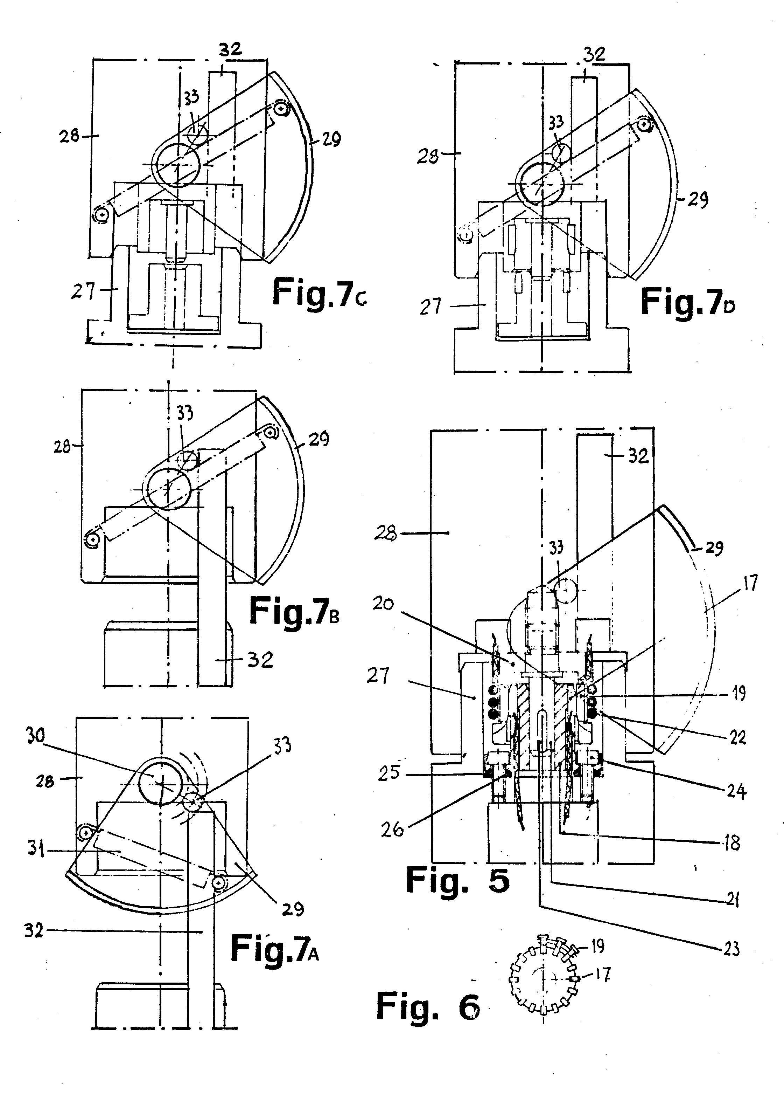

La Figure 1 représente le schéma de principe d'un dispositif conforme à l'invention; la Figure 2 représente une section longitudinale de face d'un dispositif conforme à l'invention; la Figure 3 représente une section longitudinale de profil du dispositif de la Fig. 2; la Figure 4 représente une section transversale du dispositif de la Figure 2; la Figure 5 représente , vu en section, le détail du connecteur 16 en position fermée; la Figure 6 représente, vu en section, le détail des lames 17-19; le Figures 7a,7b,7c,7d représentent la séquence des phases de fermeture du connecteur.

Limité à sa structure essentielle et en se référant aux dessins ci-joints, un dispositif conformément à l'invention comprend:

-un corps 1 ancré de façon univoque à la structure de la machine et donc sans possibilité de rotation, muni d'une tige 32 pour l'ouverture de l'écran 29 du connecteur (ainsi qu'on le verra ci-dessous);

-un porte-outil 3 solidaire du cône 2 de fixation au mandrin 20 de la machine, avec un train épicycloïdal 9,21,22,19 dont la roue 19 agit, par l'intermédiare du train d'engrenage 8,7, sur la vis 6 qui, par l'interposition de l'écrou 5, actionne le coulisseau 4 du porte-outil, et avec un roue à dents hélicoïdes 10, faisant prise avec la roue 22, dont le sens de rotation détermine celui de la vis 6;

-un moteur électrique 14 à courant continu ancré au porte-coulisseau 3 qui commande, par l'intermédiaire du train d'engrenage 13,12,11, ladite roue à dents helicoïdes 10;

-un transducteur 15 de distance à signaux numériques (Encoder) ou à signaux analogiques - (Resolver) accouplé audit moteur électrique 14 et avec l'adjonction éventuelle d'un transducteur de vitesse (dynamo tachymétrique);

-une unité de commande CNC, extérieure par rapport au porte-coulisseau 3 (non représentée sur le dessins par souci de simplification);

-un connecteur 16 pour les contacts électriques dudit moteur 14, dudit transducteur 15 et de ceux-ci avec lesdites unités de commande du dispositif et de la machine, connecteur composé:

(a) d'un composant 28 creux, solidaire de la partie fixe de la machine, dans l'axe duquel se trouve un élément femelle 20 à l'intérieur duquel se trouve un ensemble de lames 19 de cuivre au béryllium, disposée en couronne, munies d'une tête en T, revêtues de plusieurs anneaux 22 d'élastomère aux extrémités desquels son reliées les bornes des conducteurs des utilisants; au centre de ladite couronne se trouve une broche 21 - (centreur) avec languette 23, de hauteur supérieure à celle de la couronne; sur ledit composant 28 est en outre monté un écran 29 protecteur, en forme de secteur, qui tourne sur les pivots 30, est muni d'un téton 33 et est maintenu fermé par un ressort 31 sous-centre;

(b) d'un composant 27 craux, solidaire du corps susmentionné 1 du dispositif, à enclencher dans le composant 28 susmentionné, avec, disposé de manière concentrique, un élément tubulaire 18 sur la jupe duquel se trouve une couronne de lames 17 de cuivre au béryllium, qui s'opposent aux lames 19 de l'élément 20; la cavité dudit élément 18 revêt la broche centrale 21 et sa base circulaire est fixée au composant 27 au moyen de plusieurs vis 24, par l'interposition de deux anneaux toriques 25-26 d'élastomère, pour permettre à l'élément 18 de flotter durant le branchement dans l'élément 20.

Au moment de l'assemblage du dispositif sur la machine-outil, dans la phase rectiligne de la traiectoire, la tige 32 en interceptant le téton 33 ouvre l'écran 29 avant la pénétration des composants 27, 28; ensuite la broche 21 opère le centrage des éléments 18,20, à la suite de quoi ceux-ci s'enclenchent à fond. Au moment du démontage du dispositif, a lieu le processus inverse.

Les situations que peut rencontrer le dispositif une fois assemblé sur la machine avec laquelle il usine en concordance sont au nombre de deux:

-une machine avec unité de commande dépourvue d'axe libre (axe u) pour le contrôle du mouvent radial du porte-outil;

-une machine avec unité de commande avec axe addi tionnel (axe u) pour le contrôle du mouvement radial du porte-outil.

Dans le premier cas une interface effectuera la jonction entre l'unité de commande de la machine et l'unité de commande du dispositif dans lequel le CNC en vient à assumer le rôle d'axe auxiliaire - (axe u). On peut ainsi effectuer des troncatures, des alésages, des tournages externes/internes, des filetages cylindriques.

Dans le second cas, il suffira d'une interface pour l'alimentation du moteur électrique de bord, tandis que ce sera l'unité-même de commande de la machine qui contrôlera le dispositif en permettant une interpolation pour l'usinage de parties extrêmement complexes en raison du mouvement simultané et continu de quatre axes.

Pour souligner l'originalité introduite par le dispositif qui fait l'objet de la présente invention dans la technique de production des centre d'usinage, nous fournirons ci-dessous un exemple à même d'expliquer dans son ensemble les qualités particulières de l'invention.

Nous savons qu'une des plus grosses difficultés que l'on recontre dans l'usinage sur les centre d'usinage est l'exécution des trous calibrés, obtenus avec une parfaite tolérance diamétrale, étant donné que l'exécution du diamètre est confiée au réglage de l'outil monté sur l'aléseuse-même. La capteur omnidirectionnel, dont on peut pourvoir une machine qui n'est pas munie du dispositif objet de l'invention, une fois qu'il a détecté l'imperfection d'un trou, ne peut rien faire d'autre et partant, à ce stade, il est nécessaire de démonter l'aléseuse du stock et de la régler sur l'appareil de "pre-setting" prévu à cet effet, puis de monter à nouveau sur la machine l'aléseuse et de retoucher le trou calibré.

Au contraire, dans une machine pourvue du dispositif de l'invention, une fois que ledit capteur a détecté l'imperfection du trou, le capteur lui-même permet de corriger l'entraxe et le diamètre du trou en utilisant le même outil. Nous expliquons ci-dessous comment ceci est possible.

Etant entendu que le mouvement transversal du porte-outil a été baptisé quatrième axe ou axe u, si le capteur omnidirectionnel, lorsqu'il effectue le contrôle de la dimension du trou, relève un trou hors-dimension, il peut corriger le rayon de rotation de la pointe de l'outil directement sur la machine en agissant sur l'axe u. Le même principe qui permet de corriger la cote diamétrale du trou en effectuant un microdéplacement de l'outil, permet, en effectuant un macrodéplacement de l'outil opportunément choisi, de réaliser, en séquence, un certain nombre de trous, même de diamètres différentes, de sorte qu'on évite de devoir avoir en stock un nombre de barres d'alésage égal au nombre de trous différents à réaliser.

**Revendications**

1) Dispositif pour rendre automatique le mouvement transversal du coulisseau porte-outil monté sur le mandrin d'une machine-outil, durant le mouvement d'usinage, caractérisé par le fait qu'il comprend, combinés:

-une porte-coulisseau (3) solidaire du mandrin, avec un train épicycloïdal (9,21,22,19) pour actionner, par l'intermédiaire d'un couple de roues dentées - (8,7), une vis sans fin (6) qui commande la translation radiale du coulisseau (4) porte-outil et avec une roue à dents hélicoïdes (10) en prise avec la roue (22) du train épicycloïdal;

- un moteur électrique (14) monté sur ledit porte-coulisseau (3) qui actionne, par l'intermédiaire d'un réducteur avec vis sans fin (11), ladite roue (10);

-un transducteur (15), accouplé audit moteur électrique (14);

-une unité de commande du dispositif, extérieure au porte-coulisseau (3);

- un connecteur (16) pour les contacts électriques dudit moteur (14) et dudit transducteur (15) et de ceux-ci avec l'unité de commande du dispositif et avec l'unité de commande de la machine.

2) Dispositif conforme à la revendication 1) caractérisé par le fait que ledit moteur électrique - (14) est de type à courant continu.

3) Dispositif conforme à la revendication 1) caractérisé par le fait que ledit transducteur (15) est un transducteur de distance à signaux numériques.

4) Dispositif conforme à la revendication 1) caractérisé par le fait que ledit transducteur (15) est un transducteur de distance à signaux analogiques.

5) Dispositif conforme à la revendication 1) caractérisé par le fait que ledit moteur électrique - (14) est équipé d'un transducteur de distance (15) à signaux numériques et d'une dynamo tachymétrique.

6) Dispositif conforme à la revendication 1) caractérisé par le fait que ledit moteur électrique - (14) est équipé d'un transducteur de distance (15)à signaux analogiques et d'une dynamo tachymétrique.

7) Dispositif conforme à la revendication 1) caractérisé par le fait que ledit connecteur (16) a un premier composant (28) creux, solidaire de la partie fixe de la machine et un second composant - (27) creux, solidaire du corps (1) du dispositif, à enclencher dans ledit composant (28).

8) Dispositif conforme à la revendication 7) caractérisé par le fait que ledit composant (28) comprend un élément concentrique (20) tubulaire dans l'épaisseur duquel se trouve une couronne de lames (19) reliées aux conducteurs des utilisants et une broche centrale (21) pour le centrage, plus haut que l'élément (20) et pourvue d'une languette (23) d'orientation.

9) Dispositif conforme à la revendication 7) caractérisé par le fait que ledit composant (27) comprend un élément concentrique (18), tubulaire sur la jupe duquel se trouve une couronne de lames (17) juxtaposées aux lames (19) de l'élément (20) et dans la cavité axiale duquel s'insère la broche (21) avec sa languette (23) dudit composant (28).

10) Dispositif conforme à la revendication 8) caractérisé par le fait que lesdites lames (19) de l'élément (20) sont enserrées dans un ou plusieurs anneaux (22) toriques, réalisés en matière isolante et élastique.

11) Dispositif conforme à la revendication 9) caractérisé par le fait que ledit élément (18) est fixé à l'intérieur du composant (27) par plusieur vis - (24) avec interposition de deux anneaux (26) toriques, concentriques, en matière élastique.

12) Dispositif conforme à la revendication 7) caractérisé par le fait qu'un des composants (28,27) est muni d'un écran (29) de protection contre la saleté, basculant, avec un ressort sous-centre (31) de fermeture.

**Fig. 1**

**Fig. 2**

**Fig. 3**

**Fig. 4**

**Fig.7c**

**Fig.7D**

**Fig.7B**

**Fig.7A**

**Fig. 5**

**Fig. 6**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 895 490 (DUNKEL) <br> * Page 4, colonne de droite; page 5, colonne de gauche; figures 1-6 * | 7-9 | B 23 B 29/034 <br> B 23 Q 1/00 <br> H 01 R 23/26 |
| | --- | | |
| X | US-A-2 730 684 (GUTMAN) <br> * Colonne 2, lignes 50-72; colonnes 3,4; figures 1-5 * | 7-10 | |
| | --- | | |
| Y | DE-A-2 734 126 (SIEMENS) <br> * Page 4, lignes 31-39; pages 5,6; figure * | 1 | |
| A | | 3 | |
| | --- | | |
| Y | GB-A-2 059 827 (WOHLHAUPTER) <br> * Page 2, lignes 21-92; figures 1-7 * | 1 | DOMAINES TECHNIQUES RECHERCHES (Int. Cl.4) |
| | --- | | B 23 B 29/00 |
| A | DE-A-2 455 402 (STAVELY) | 7 | B 23 Q 1/00 |
| A | EP-C-0 054 838 (D'ANDREA) | | H 01 R 13/00 <br> H 01 R 23/00 |
| A | EP-A-0 022 569 (RENAULT) | | |
| A | DE-A-3 300 803 (TOSHIBA) | | |
| A | FR-A-2 380 650 (MANNESMANN) | | |
| A | FR-A-2 091 741 (U.K. ENERGY AUTHO-RITY) | | |
| A | US-A-1 676 206 (RATLIFF) | | |

Le présent rapport de recherche a été établi pour toutes les revendications

| Lieu de la recherche | Date d'achèvement de la recherche | Examinateur |
|---|---|---|
| La Haye | 10-09-1986 | BOGAERT |

Office européen

des brevets

| | REVENDICATIONS DONNANT LIEU AU PAIEMENT DE TAXES |
|---|---|

La présente demande de brevet européen comportait lors de son dépôt plus de dix revendications.

☐ Toutes les taxes de revendication ayant été acquittées dans les délais prescrits, le présent rapport de recherche européenne a été établi pour toutes les revendications.

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées.

à savoir les revendications:

☐ Aucune taxe de revendication n'ayant été acquittée dans les délais prescrits, le présent rapport de recherche européenne a été établi pour les dix premières revendications.

| X | ABSENCE D'UNITE D'INVENTION |
|---|---|

La division de la recherche estime que la présente demande de brevet européen ne satisfait pas à l'exigence relative à l'unité d'invention et concerne plusieurs inventions ou pluralités d'inventions,

à savoir:

1) Revendications 1-6: Dispositif pour rendre automatique le mouvement transversal

2) Revendications 7-12: Détails de construction du connecteur

☒ Toutes les nouvelles taxes de recherche ayant été acquittées dans les délais impartis, le présent rapport de recherche européenne a été établi pour toutes les revendications.

☐ Une partie seulement des nouvelles taxes de recherche ayant été acquittée dans les délais impartis, le présent rapport de recherche européenne a été établi pour les parties de la demande de brevet européen qui se rapportent aux inventions pour lesquelles les taxes de recherche ont été acquittées

à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications.

à savoir les revendications: